# EUROPÄISCHE PATENTSCHRIFT

(11) **EP 1 440 828 B1**
(45) Veröffentlichungstag und Bekanntmachung des Hinweises auf die Patenterteilung: **30.08.2006**
(21) Anmeldenummer: 03027969.9
(22) Anmeldetag: 05.12.2003
(51) Int. Cl.: B60H 1/00

(54) **Verfahren zur Bestimmung der Innenraumtemperatur eines Kfz-Fahrgastraumes, Anordnung zur Durchführung des Verfahrens sowie Temperatursensor**
Method for determining the temperature of a motor vehicle passenger compartment, device for carrying out the method and temperature sensor
Procédé pour déterminer la température de l'habitacle d'un véhicule automobile, système de mise en oeuvre dudit procédé ainsi qu'un capteur à température

(30) Priorität: 22.01.2003 DE 10302285
(43) Veröffentlichungstag der Anmeldung: 28.07.2004
(73) Patentinhaber: Preh GmbH, 97616 Bad Neustadt a.d. Saale (DE)
(72) Erfinder: Rüttiger, Anton, 97772 Wildflecken (DE)
(74) Vertreter: Dietrich, Barbara

(56) Entgegenhaltungen:
- DE-A- 10 016 419
- DE-A- 10 049 979
- DE-C- 19 728 803
- US-A- 5 531 377
- US-A1- 2002 125 332

## Beschreibung

Zur automatischen Regelung der Innenraumtemperatur in einem Fahrzeug ist es erforderlich, die tatsächliche Innenraumtemperatur zu einem bestimmten Zeitpunkt zu kennen. In der Regel wird dann eine Stellgröße gebildet, welche die Abweichung der tatsächlichen Innenraumtemperatur von der angestrebten Innenraumtemperatur widerspiegelt. Die Stellgröße dient zur Ausregelung der Differenz. Ein derartiges Verfahren wird in der DE 40 24 431 A1 beschrieben.

Mit der DE 198 29 143 C1 wird ein weiteres Verfahren zur Änderung der Innenraumtemperatur eines Fahrzeuges offenbart. Zur Kompensation einer Veränderung des Istwertes der Innenraumtemperatur infolge von äußeren Einflüssen, wie beispielsweise niedrige Außentemperatur, sind ein Innenraum-Temperaturfühler sowie ein Außentemperatursensor vorgesehen. Der Innenraum-Temperaturfühler befindet sich im Steuerungsgerät.

Die DE 197 28 803 C1 offenbart eine Anordnung zur Temperaturmessung und / oder - regelung mit einem Gehäuse, das in seinem Innern einen Temperaturfühler zur Messung der außerhalb des Gehäuses gegebenen Raumtemperatur aufweist, wobei eine oder mehrere Wärmequellen in und / oder an dem Gehäuse vorhanden sind. Zusätzlich ist zumindest ein Hilfstemperaturfühler innerhalb des Gehäuses an einer Stelle vorgesehen, deren Temperatur durch den Wärmestrom der Wärmequelle stärker beeinflußt wird als die Temperatur am Temperaturfühler.
Nachteilig bei der letztgenannten Lösung ist die große Abweichung des gemessenen Temperatursignals von der tatsächlichen Innenraumtemperatur aufgrund der großen Störeinflüsse auf den Sensor, sowie die große Trägheit des Sensors, welcher Änderungen der Innenraumtemperatur nur zeitlich verzögert und geglättet erfährt. Daher ist in diesen Fällen ein hoher Aufwand zur Korrektur des Temperatursignals erforderlich.

Aus der DE 100 16 419 C2 ist eine Vorrichtung zur indirekten Erfassung der in den Innenraum eines Fahrzeuges einfallenden Sonnenstrahlung bekannt. Ein hier verwendeter Photosensor ist so am Gehäuse angebracht, dass dieser keiner direkten Sonneneinstrahlung ausgesetzt wird und daher nur die im Fahrzeuginnenraum reflektierte bzw. transmittierte Strahlung der Sonnenstrahlung mißt.

In der Entwicklung sind zur Zeit Messverfahren, welche die Innenraumtemperatur mittels einem NTC ( Widerstand mit negativem Temperaturkoeffizienten) direkt auf der Oberfläche des Bedienteils ohne Zwangslüftung messen. Die Unzuverlässigkeit dieses Messverfahrens resultiert aus der wechselnden Luftströmung an der Bedienteiloberfläche, welche die Messwerte am NTC selbst bei Berücksichtigung von Eigenerwärmung und Sonnenbeeinflussung stark relativieren.

Aus der DE 100 49 979 C2 ist eine Vorrichtung zur Ermittlung der Temperatur im Innenraum eines Fahrzeuges bekannt, bei dem ein Temperaturfühler hinter einer an den Innenraum angrenzenden Wand angeordnet ist. Ein Wärmeleitungselement dient zur Erfassung der Temperatur der Luft des Innenraums innerhalb von dessen wandnahen Bereichs. Das Wärmeleitungselement steht mit dem Temperaturfühler in Wärmeleitkontakt und ist an bzw. nahe an die Wand oder durch eine Öffnung in der Wand angebracht. Durch diese Vorrichtung wird die Störbeeinflussung durch partielle Sonnenstrahlung am Sensorgehäuse erfasst und entsprechend korrigiert.

Aus der US-A-5531377 ist eine Vorrichtung gemäß das erste Teil des Anspruchs 3 bekannt und das Verfahren gemäß das erste Teil des Anspruchs 1.

Die Erfindung stellt sich die Aufgabe, ein Verfahren sowie eine Anordnung und einen Temperatursensor anzugeben, mit denen eine zufriedenstellende Bestimmung der Innenraumtemperatur unter Berücksichtigung eines wechselnden Wärmeübergangswiderstandes der Bedienteiloberfläche zur umgebenen Luftströmung möglich ist.

Gelöst wird die Aufgabe durch die Merkmale des Patentanspruchs 1 bzw. des Patentanspruchs 3.

Der Erfindung liegt die Erkenntnis zugrunde, dass beispielsweise im Falle der Sonneneinstrahlung ein diese Strahlung messender Sensor bei ruhender Luft vor dem Sensor mehr aufgeheizt wird, als bei bewegter Luft. Gleicher Effekt tritt beim Messen der Temperatur einer Bedienteiloberfläche aufgrund der Eigenerwärmung der Elektronik ein. Auch hier werden Meßergebnisse durch Luftzirkulation verfälscht.

Um diese Verfälschung mit einfachen Mitteln aus dem Messergebnis zu eliminieren, wird vorgeschlagen, das Vorhandensein von bewegter oder ruhender Luft vor dem Messort festzustellen, d.h. die Intensität der Luftbewegung als solches zu ermitteln. Diese Information wird gewichtet und geht als Korrekturgröße in die Stellgröße der Regelung ein, mit dem Ziel, die Innenraumtemperatur eines Fahrzeuges unter Berücksichtigung des wechselnden Wärmeübergangswiderstandes der Bedienteiloberfläche zur umgebenden Luftströmung zu erfassen.

Wichtig bei der praktischen Umsetzung der Idee ist die Gestaltung der Komponenten zueinander, um den Einfluß der Luft vor dem Messort ermitteln zu können. So wird ein Heizelement in direkter Temperaturankopplung zu einem, vorzugsweise bereits die Bedienteiloberflächentemperatur ermittelnden Sensor angebracht. Der Sensor wird durch das Heizelement in kurzen Pulsen und hierzu in relativ großen Zeitabständen geringfügig aufgeheizt. Aus der Differenz der Sprungantwort im Vergleich zu einer adaptiv am Sensor ermittelten Reaktion bei ruhender Luft kann der Einfluß durch die Luftströmung ermittelt und die Störgrößen _{"}Bedienteilerwärmung" und ganz besonders _{"}Sonne" gewichtet werden. Ein aus der Wichtung resultierendes Korrektursignal geht in die Ermittlung der Stellgröße und der Ausregelung ein.

In einer bevorzugten Ausführung sind beide Bauelemente in einem Sensorgehäuse integriert, welches als Incar - Sensor an der Oberfläche eines Klima-Bedienteils angebracht ist. Der die Bedienteiloberfläche ermittelnde Temperatursensor und das Heizelement sind auf einer Folie im Gehäuse aufgebracht, durch welche die gewünschte Temperaturankopplung beider erreicht wird.
Weiterhin weist der Sensor zwischen beiden Bauelementen eine Impulsdämpfungsstrecke auf, die zusammen mit der Folie und Leiterbahnen gebildet wird.

Mit Hilfe des so aufgebauten Incar-Sensors sind die wechselnden Wärmeübergangswiderstände der Bedienteiloberfläche zur umgebenen Luftströmung direkt ermittelbar.

In einer weiteren bevorzugten Ausführung beinhaltet der Incar -Sensor zusätzlich oder alternativ neben dem Heizelement und dem NTC einen Solar- bzw. lichtempfindlichen Sensor, der zur Ermittlung der Sonneneinstrahlung auf den Messort dient.

Soll die Bedienteileigenerwärmung zusätzlich berücksichtigt werden, kann zur Messung vorzugsweise ein im Regelsystem , d.h., in der Bedienteilelektronik, vorhandener NTC genutzt werden, wobei auch die Integration eines eigenen weiteren NTC im Incar - Sensor möglich ist.

Der Incar- bzw. Temperatursensor ist vorzugsweise in Folieneinspritztechnik (Folie mit Kunststoff hinterspritzt) oder in MID-Technik hergestellt (Molded Interconnect devices = Spritzgegossener Schaltungsträger, siehe dazu http://www.vdivde-it.de/smt/raeuml baugruppen.html).

Durch den vorgeschlagenen Incar-Sensor kann auf einen Sensorlüfter verzichtet werden, wodurch bekannte Nachteile, wie Verschmutzung und Geräusch, vermieden werden. Des Weiteren bieten sich neue Möglichkeiten beim Design und Aufbau der Bedienteile an.

Anhand eines Ausführungsbeispiels mit Zeichnung soll die Erfindung näher erläutert werden.

Es zeigt
- Fig. 1 a - c: den Aufbau eines Incar-Sensors in MID-Technik,
- Fig. 2: einen Incar-Sensor in Folientechnik in Draufsicht,
- Fig. 2a: den Sensor aus Fig. 2 im Schnitt A-A,
- Fig. 2b: die Folie aus Fig. 2a in einer Draufsicht,
- Fig. 3: ein Bedienteil mit Incar-Sensor in einer Draufsicht,
- Fig. 4: ein Impulsdiagramm zur Darstellung des Einflusses der Luftzirkulation,
- Fig. 5: eine Diagrammdarstellung der Sprünge der Lufttemperatur am Messort.

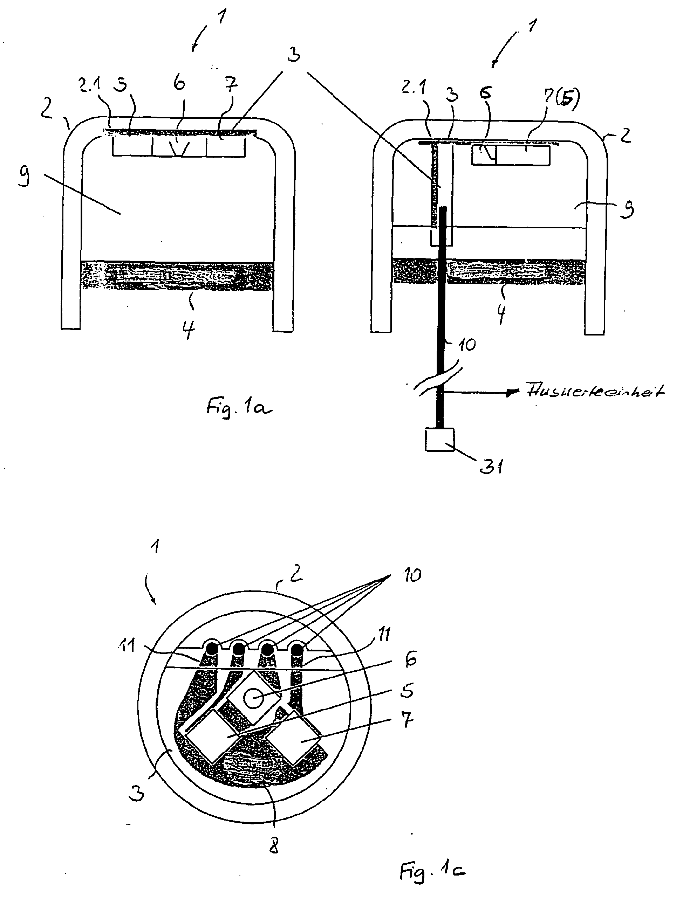

In den Fig. 1a bis c sind ein in MID-Technik hergestellter, kompakt aufgebauter Sensor 1 als Incar-Sensor oder Temperatursensor in verschiedenen Ansichten dargestellt. Die Fig. 1 a zeigt ihn in einer Vorderansicht, Fig. 1 b in einer Seitenansicht und Fig. 1 c in einer Draufsicht, jeweils im Schnitt.

Der Sensor 1 besitzt ein Gehäuse 2, das im oberen beispielsweise eine Folie 3 aufweist, welche als Substrat des Sensors 1 fungiert. Nach unten hin ist das Gehäuse 2 durch eine Art Vergußmasse 4 verschlossen. Erkennbar sind auf der Folie 3 in der bevorzugten Ausführung ein Heizelement 5, beispielsweise ein Heizwiderstand, ein Solarsensor 6 , beispielsweise ein Photosensor, sowie ein NTC-Element 7 von hinten aufgedruckt. Die Folie 3 besteht beispielsweise aus PC oder Macrolon. Auf der Folie 3 befinden sich zwischen dem Heizelement 5 und dem NTC 7 aufgebrachte Kupferbahnen oder Silberbahnen zur Bildung einer Impulsdämpfungsstrecke 8. Im Gehäuse 2 befindet sich zwischen der Folie 3 mit den Bauelementen 5, 6, 7 und der Vergußmasse 4 ein Wärmeisolationsmaterial 9, was u.a. auch Luft sein kann. Wie in Fig. 1 b näher aufgezeigt, erfolgt der elektrische Kontakt zur einer weiter nicht näher dargestellten Signalverarbeitungseinheit über Kontaktstifte 10. Fig. 1 c zeigt die Kontaktstifte 10, die ihrerseits über Leiterbahnen 11 jeweils mit den einzelnen Bauteilen 5-7 in elektrischen Kontakt stehen.

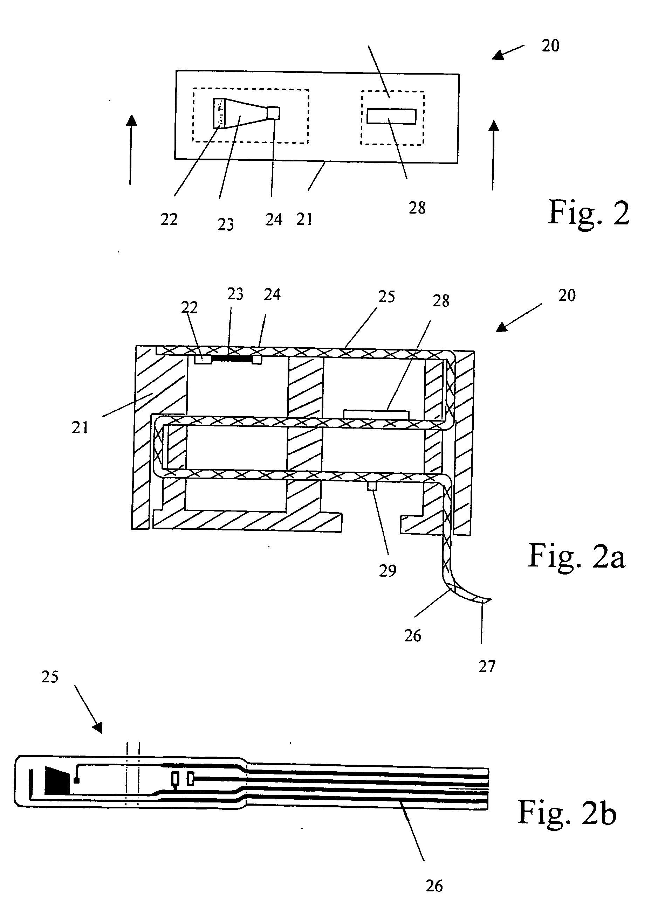

Fig. 2 zeigt einen in Folientechnik hergestellten Incar-Sensor 20 in einer Draufsicht. Der hier dargestellte Sensor 20 besitzt vorzugsweise ein Gehäuse 21 mit den Auβenmaβen 17 x 8 x 3 mm.

Fig. 2a zeigt den Sensor 20 im Schnitt A-A aus Fig. 2. Auch hier sind im gemeinsamen Sensorgehäuse 21 ein Heizelement 22, eine Impulsdämpfungsstrecke 23, ein NTC-Element 24 integriert und einer Folie 25 von hinten aufgedruckt. Die besondere Flexibilität der Folie 25 ermöglicht ein Falten bzw. Knicken der Folie 25 innerhalb des Sensorgehäuses 21. Dabei werden durch das Falten Kammern gebildet.
Des Weiteren weist der Sensor 20 in der bevorzugten Ausführung einen lichtempfindlichen Sensor 28, beispielsweise eine Photosensor auf. Die Folie 25 ist zumindest im Bereich des darunter befindlichen Photosensors 28 IR-druchlässig. Als Kontakt zur nicht näher dargestellten Auswerteeinheit dient eine Folienbahn 26 mit einem Nullkraftsteckverbinder 27. Ebenfalls positiv gestaltet sich das Anbringen eines weiteren NTC 29 innerhalb des Sensorgehäuses 21. Diese kann zur Bestimmung der Eigenteilerwärmung des Bedienteils herangezogen werden. Zu diesem Zweck ist das Gehäuse 21 an dieser Stelle offen. Das Gehäuse 21 ist vorzugsweise mehrteilig und über Schnappvorsprünge ineinander einklippsbar.

### Der Sensor 20 wird vorzugsweise wie folgt hergestellt:

Das Heizelement 22 wird direkt in Dickschicht -Technik auf die Folie 25 gebracht. Der NTC 24 kann dann auf die Folie 25 mittels Leitkleber geklebt oder gelötet werden. Auch die Wärmeleit- bzw. Dämpfungsstrecke 23 wird direkt auf der Folie 25 aufgebracht. Wie bereits erwähnt, kann die Folie 25 aus Polycarbonat oder Polyimid etc. bestehen, welches vorzugsweise IR-lichtdurchlässige Bereiche aufweist. Die Folie 25 wird dann ins Sensorgehäuse 21 eingelegt, vorzugsweise in dieses eingeklebt und hinterspritzt. Sollte das Folienmaterial nicht aus IR-lichtdurchlässigem Material bestehen, kann alternativ die Folie 25 mit einem IR-lichtdurchlässigem Lack abgedeckt werden, vollständig oder auch nur teilweise, zumindest aber im Bereich des Photosensors 28.

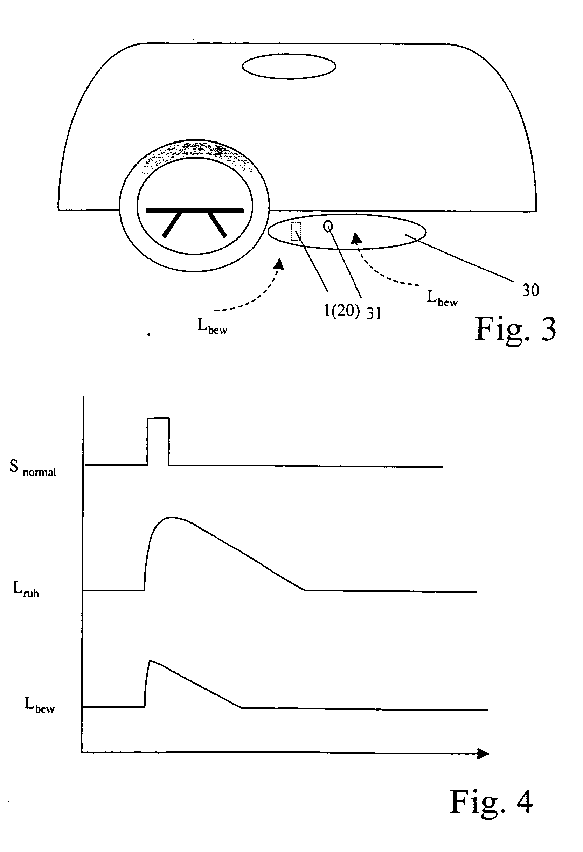

Fig. 3 zeigt skizzenhaft ein Bedienteil 30 in einem nicht näher dargestellten Fahrzeuginnenraum eines Kraftfahrzeuges. Dargestellt ist zudem ein im Bedienteil 30 befindlicher NTC 31, welcher zur Bestimmung der Bedienteileigenerwärmung herangezogen werden kann.
Durch den mit seinem oberen Bereich in den Innenraum weisend angebrachten kompakten Temperatursensor 1, 20 kann mit Hilfe des Solarsensors 6 bzw. des lichtempfindlichen Sensors 28 die Sonnenstrahlung auf den Messort / das Bedienteil 30 in bekannter Art und Weise gemessen werden. Über das im Temepratursensor 1, 20 befindliche NTC-Element 7 bzw. 24 kann die Bedienteiloberflächentemperatur ermittelt werden, die der Lufttemperatur im Innenraum entspricht.

Beide Informationen berücksichtigen dabei noch nicht die Luftzirkulation (Pfeil) vor dem Bedienteil 30. Diese Bestimmung erfolgt mit Hilfe des Heizelementes 5, 22 und dem NTC 7, 24 und aufgrund der Kenntnis über die Wärmeinhalte der Masse der Folie 3, 25 und der Dämpfungsstrecke 8, 23, deren Materialien bekannt sind. In einer ersten adaptiven Messung wird am NTC-Element 7, 24 die Reaktion bei ruhender Luft Lᵣᵤₕ ermittelt und abgespeichert. Auf das Heizelement 5, 22 werden dann in relativ großen Zeitabständen kurze Pulse Sₙₒᵣₘₐₗ gegeben, wodurch dieser geringfügig den NTC 7, 24 aufheizt. Aus der Differenz der Sprungantwort im Vergleich zu der adaptiv am NTC 7 ermittelten Reaktion bei ruhender Luft Lᵣᵤₕ wird eine oder keine Luftströmung ermittelt.
Die Dämpfung des über die Impulsdämpfungsstrecke 8, 23 gesendeten Impulses Sₙₒᵣₘₐₗ dient somit als Informationen über die Art der Luftbewegung.
Praktisch hat sich gezeigt, dass je nach Luftbewegung die Sprungantwort am NTC-Element 7, 24 unterschiedlich verläuft, da die Wärmeinformation des Heizwiderstandes 5, 22 durch die sich bewegende Luft gedämpft wird. Der Kurvenverlauf bei ruhender Luft Lᵣᵤₕ unterscheidet sich somit wesentlich vom Kurvenverlauf bei bewegter Luft L_{bew}, nämlich durch unterschiedliche Impulsbreiten und Impulshöhen, wie in Fig. 3 dargestellt.

Das Wissen, ob es sich um bewegte oder ruhende Luft handelt, führt dann zu einer Wichtung der Sonneneinstrahlung und damit der Wichtung der gemessenen Innenraumtemperatur. Wird bewegte Luft L_{bew} ermittelt, ist folglich die Sonneneinstrahlung in den Fahrgastraum höher als die gemessene, wobei bei ruhender Luft Lᵣᵤₕ der gemessene Wert mit dem aktuellen Wert der Innenraumtemperatur übereinstimmt. In Weiterführung des Verfahrens und unter Berücksichtigung der ermittelten Eigenerwärmung des Messortes / Bedienteils 30 , beispielsweise mit zusätzlicher Hilfe eines NTC 31 des Bedienteils 30, wird mit Hilfe der gewichteten Größen eine korrekte Inneraumtemperatur bestimmt.

Die gewichtete Luftbewegung geht somit als Korrekturgröße in die Störgrößen Sonne und Bedienteileigenerwärmung und somit in die Regelung ein. Beide können auch getrennt oder nur als einzelne Größen gewichtet in die Regelung eingehen.

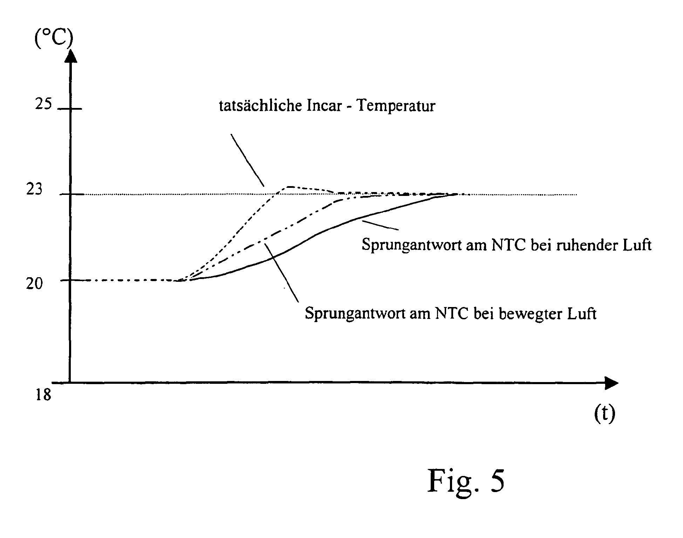

Aufgrund der Trägheit von unbelüfteten Temperatursensoren können Sprünge der Lufttemperatur in der Fahrgastzelle nur verzögert erfasst werden. Infolge unterschiedlicher Luftströmungen an der Sensoroberfläche resultiert ein veränderlicher Wärmeübergangswiderstand zur Luft der Fahrgastzelle. Temperatursprünge bei bewegter Luft werden schneller übertragen als bei ruhender Luft (Fig. 5).
Aus der ermittelten Luftbewegung vor dem Bedienteil 30 (bzw. des Messortes für die Innenraumtemperatur allgemein) ergibt sich ein weiterer vorteilhafter Ansatz. Durch die Erfassung einer echten Zeitkonstante kann frühzeitig auf eine Änderung der Temperatur geschlossen werden, was einen schnellen Eingriff in die Regelung ermöglicht. Anhand der Sprungantwort kann zusätzlich ein zu erwartender Endwert bestimmt werden. Das bewirkt gleichfalls ein zielgerichtetes Eingreifen in die Klimaregelung.

### Bezugszeichen

- 1: Incar-Sensor
- 2: Gehäuse
- 3: Folie
- 4: Vergußmasse
- 5: Heizelement, Heizwiderstand
- 6: lichtempfindlicher Sensor
- 7: NTC-Element
- 8: Wärmeleit- bzw. Dämpfungsstrecke
- 9: Wärmeisolationsmaterial
- 10: Kontaktstifte
- 11: Leiterbahnen

- 20: I ncar-Sensor
- 21: Gehäuse
- 22: Heizelement
- 23: Wärmeleit- bzw. Dämpfungsstrecke
- 24: NTC-Element
- 25: Folie
- 26: Folienbahen
- 27: Nullkraftsteckverbinder
- 28: lichtempfindlicher Sensor (Photodiode, - transistor)
- 29: NTC-Element

## Patentansprüche

1. Verfahren zur Bestimmung der Innenraumtemperatur, insbesondere eines Fahrgastraumes, auf Grundlage einer an einem Sensor (6, 28) ermittelten Größe für die Sonneneinstrahlung und/oder einer an einem weiteren Sensor (7, 24) ermittelten Oberflächentemperatur am Messort (30), **dadurch gekennzeichnet, dass**
- eine Luftzirkulation vor dem Messort (30) ermittelt wird, welche
- als variabler Wärmeübergangswiderstand gewichtet als Korrekturgröße zumindest in die ermittelte Sonneneinstrahlung eingeht, wozu
- in einer ersten adaptiven Messung am Sensor (7, 24) die Reaktion am Sensor (7, 24) bei ruhender Luft (Lᵣᵤₕ) ermittelt und abgespeichert wird,
- ein zusätzliches Heizelement (5, 22) mit einem Signal (Sₙₒᵣₘₐₗ) beaufschlagt wird, welches als Sprungantwort am Sensor (7, 24) ausgelesen wird, wobei
- aus der Differenz der Sprungantwort im Vergleich zur adaptiv ermittelten Reaktion eine vorhandene oder nicht vorhandene Luftströmung ermittelt wird.

2. Verfahren nach Anspruch 1, **dadurch gekennzeichnet, dass** bei vorhandener Luftbewegung (Lbew) die Sprungantwort am Sensor (7, 24) eine kleinere Impulshöhe und kleinere Impulsbreite als die Sprungantwort bei ruhender Luft (Lᵣᵤₕ) aufweist.

3. Vorrichtung zur Durchführung des Verfahrens nach Anspruch 1 zur Erfassung der Temperatur im Innenraum eines Kraftfahrzeuges bestehend aus
- einem Sensor (6, 28) zur Messung einer Sonneneinstrahlung,
- einem Sensor (7, 24) zur Ermittlung einer Temperatur am Messort und
- einem in der Nähe des Sonnensensor (6, 28) und des Temperatursensors (7, 24) angeordneten Heizelementes (5, 22),
**dadurch gekennzeichnet, dass**
- der Sonnensensor (6, 28) ein Fotosensor, insbesondere eine Fotodiode, ist und dass
- der Temperatursensor (7, 24) in einem Bedienteil (30) angeordnet ist und die Oberflächentemperatur des Bedienteils (30) mit dem Temperatursensor (7, 24) erfassbar ist und dass
- mit dem Heizelement (5, 22) eine Luftbewegung (Lᵣᵤₕ, L_{bew}) im Kraftfahrzeug erfassbar ist.

4. Vorrichtung nach Anspruch 3, **dadurch gekennzeichnet, dass** das Heizelement (5, 22) mittels einer Impulsdämpfungsstrecke (8, 23), insbesondere einer Silberbahn oder einer Kupferbahn, mit dem Temperatursensor (7, 24) verbunden ist.

5. Vorrichtung nach Anspruch 4, **dadurch gekennzeichnet, dass** die Impulsdämpfungsstrecke (8, 23) durch eine Folie (3, 25) und darauf aufgebrachten Leiterbahnen gebildet ist.

6. Vorrichtung nach Anspruch 5, **dadurch gekennzeichnet, dass**
- die Vorrichtung in einem Gehäuse (2) untergebracht ist,
- im oberen Bereich des Gehäuses die Folie (3) angeordnet ist, die als Substrat der Vorrichtung fungiert und auf der zumindest der Sensor (7) zur Ermittlung der Oberflächentemperatur des Messortes und das Heizelement (5) hinterspritzt aufgebracht sind und
- das Gehäuse (2) nach unten hin durch eine Vergußmasse (4) verschlossen ist, durch die Kontaktstifte (10) geführt sind.

7. Vorrichtung nach Anspruch 6, **dadurch gekennzeichnet, dass** das Gehäuse (2) zumindest oberhalb des auf der Folie (3) befindlichen Sensors (6) zur Messung der Sonneneinstrahlung aus einem IR-durchlässigen Material besteht.

8. Vorrichtung nach Anspruch 5, **dadurch gekennzeichnet, dass**
- die Vorrichtung in einem Gehäuse (21) untergebracht ist,
- die Folie (25) flexibel ist und mit den darauf angebrachten Sensor (24) zur Ermittlung der Oberflächentemperatur des Messortes und dem Heizelement (22) innerhalb des Gehäuses (21) geknickt geführt eingebunden ist und
- Folienbahnen (26) aus dem Gehäuse (21) geführt sind.

9. Vorrichtung nach Anspruch 8, **dadurch gekennzeichnet, dass** ein weiterer Temperatursensor (29), der ein NTC-Element aufweist, zur Bestimmung einer Bedienteileigenerwärmung im Gehäuse (21) auf der Folie (25) angebracht ist und das Gehäuse (21) in diesem Bereich offen ist.

10. Vorrichtung nach Anspruch 8 oder 9, **dadurch gekennzeichnet, dass** der die Sonneneinstrahlung messende Sensor (28) auf der Folie (25) aufgebracht ist und das Gehäuse (21) im Bereich des Sensors (28) einen IR-lichtdurchlässigen Bereich aufweist.

11. Vorrichtung nach Anspruch 10, **dadurch gekennzeichnet, dass** der Teil der Folie (25), unterhalb dem der Sensor (28) zur Messung der Sonnenstrahlung angeordnet ist, aus IR-durchlässigem Material besteht.

12. Vorrichtung nach Anspruch 3, **dadurch gekennzeichnet, dass** als Heizelement (5, 22) ein NTC-Element verwendet wird.

13. Verfahren zur Herstellung einer Vorrichtung nach einem der Ansprüche 6 oder 7, **dadurch gekennzeichnet, dass** die Vorrichtung in MID-Technik hergestellt wird.

14. Verfahren zur Herstellung einer Vorrichtung nach einem der Ansprüche 8 bis 12, **dadurch gekennzeichnet, dass** die Vorrichtung in Folieneinspritztechnik hergestellt wird.

## Claims

1. Method for determining the interior temperature, in particular of a passenger compartment, on the basis of a variable for solar radiation which is determined at a sensor (6, 28) and/or a surface temperature at the measurement site (30) which is determined at a further sensor (7, 24), **characterized in that**
- air circulation at the measurement site (30) is determined, which
- at least is added to the determined solar radiation as a correction variable weighted as a variable heat transmission resistance, for which reason
- the reaction at the sensor (7, 24) with still air (Lₛₜᵢₗₗ) is determined and stored in a first adaptive measurement operation at the sensor (7, 24),
- a signal (Sₙₒᵣₘₐₗ) is applied to an additional heating element (5, 22) and is read out at the sensor (7, 24) as a step-function response, with
- the presence or absence of an air flow being determined from the difference between the step-function response compared to the adaptively determined reaction.

2. Method according to Claim 1, **characterized in that** the step-function response at the sensor (7, 24) has a lower pulse height and a lower pulse width with air movement (Lₘₒᵥₑ) than the step-function response with still air (Lₛₜᵢₗₗ).

3. Apparatus for carrying out the method according to Claim 1 for detecting the temperature in the interior of a motor vehicle, comprising
- a sensor (6, 28) for measuring solar radiation,
- a sensor (7, 24) for determining the temperature at the measurement site, and
- a heating element (5, 22) which is arranged in the vicinity of the solar sensor (6, 28) and the temperature sensor (7, 24),
**characterized in that**
- the solar sensor (6, 28) is a photosensor, in particular a photodiode, and **in that**
- the temperature sensor (7, 24) is arranged in an operator control part (30) and the surface temperature of the operator control part (30) can be detected by the temperature sensor (7, 24), and **in that**
- air movement (Lₛₜᵢₗₗ, Lₘₒᵥₑ) in the motor vehicle can be detected with the heating element (5, 22).

4. Apparatus according to Claim 3, **characterized in that** the heating element (5, 22) is connected to the temperature sensor (7, 24) by means of a pulse-damping section (8, 23), in particular a silver track or a copper track.

5. Apparatus according to Claim 4, **characterized in that** the pulse-damping section (8, 23) is formed by a film (3, 25) and conductor tracks which are applied to it.

6. Apparatus according to Claim 5, **characterized in that**
- the apparatus is accommodated in a housing (2),
- the film (3) is arranged in the upper region of the housing, functions as a substrate of the apparatus, and at least the sensor (7) for determining the surface temperature of the measurement site and the heating element (5) are applied to the said film by in-mould labelling, and
- the housing (2) is closed towards the bottom by an encapsulation compound (4) through which the contact pins (10) are passed.

7. Apparatus according to Claim 6, **characterized in that** the housing (2) is composed of an IR-permeable material, at least above the sensor (6) for measuring solar radiation which is located on the film (3).

8. Apparatus according to Claim 5, **characterized in that**
- the apparatus is accommodated in a housing (21),
- the film (25) is flexible and is incorporated such that it is passed in a bent manner inside the housing (21) with the sensor (24) for determining the surface temperature of the measurement site and the heating element (22) which are applied to the said film, and
- film webs (26) are passed out of the housing (21).

9. Apparatus according to Claim 8, **characterized in that** a further temperature sensor (29), which has an NTC element, for determining inherent heating up of an operator control part is applied to the film (25) in the housing (21), and the housing (21) is open in this region.

10. Apparatus according to Claim 8 or 9, **characterized in that** the sensor (28) which measures solar radiation is applied to the film (25), and the housing (21) has an IR-permeable region in the region of the sensor (28).

11. Apparatus according to Claim 10, **characterized in that** the part of the film (25) beneath which the sensor (28) for measuring solar radiation is arranged is composed of IR-permeable material.

12. Apparatus according to Claim 3, **characterized in that** the heating element (5, 22) used is an NTC element.

13. Method for producing an apparatus according to either of Claims 6 or 7, **characterized in that** the apparatus is produced using MID technology.

14. Method for producing an apparatus according to one of Claims 8 to 12, **characterized in that** the apparatus is produced using film-injection technology.

## Revendications

1. Procédé pour déterminer la température de l'intérieur, en particulier de l'habitacle d'un véhicule automobile, sur la base d'une grandeur pour l'insolation détectée sur un capteur (6, 28) et/ou d'une température de surface sur le lieu de mesure (30) détectée sur un autre capteur (7, 24), **caractérisé en ce que** :
- une circulation d'air est détectée devant le lieu de mesure (30), laquelle
- intervient au moins dans l'insolation détectée en tant que résistance variable à la transmission de la chaleur pondérée comme grandeur de correction,
- pour laquelle, dans une première mesure adaptative sur le capteur (7, 24), la réaction sur le capteur (7, 24) en présence d'air statique (Lᵣᵤₕ) est détectée et mise en mémoire,
- un élément chauffant supplémentaire (5, 22) reçoit un signal (Sₙₒᵣₘₐₗ) qui est lu comme réponse transitoire sur le capteur (7, 24),
- un courant d'air présent ou non présent étant détecté à partir de la différence de la réponse transitoire par rapport à la réaction détectée de manière adaptative.

2. Procédé selon la revendication 1, **caractérisé en ce qu'**en présence d'un déplacement d'air (L_{bew}), la réponse transitoire sur le capteur (7, 24) présente une plus petite hauteur d'impulsion et une plus petite largeur d'impulsion que la réponse transitoire en cas d'air statique (Lᵣᵤₕ) .

3. Dispositif pour mettre en oeuvre le procédé selon la revendication 1 pour déterminer la température dans l'habitacle d'un véhicule automobile constitué de :
- un capteur (6, 28) pour mesurer une insolation,
- un capteur (7, 24) pour déterminer une température sur le lieu de mesure et
- un élément chauffant (5, 22) disposé à proximité du capteur solaire (6, 28) et du capteur de température (7, 24),
**caractérisé en ce que** :
- le capteur solaire (6, 28) est un photocapteur, en particulier une photodiode,
- le capteur de température (7, 24) est disposé dans un organe de commande (30) et la température de surface de l'organe de commande (30) peut être détectée avec un capteur de température (7, 24) et
- **en ce qu'**un déplacement d'air (Lᵣᵤₕ, L_{bew}) dans le véhicule automobile peut être détecté avec l'élément chauffant (5, 22).

4. Dispositif selon la revendication 3, **caractérisé en ce que** l'élément chauffant (5, 22) est relié au capteur de température (7, 24) au moyen d'un tronçon d'amortissement d'impulsion (8, 23), en particulier une piste d'argent ou une piste de cuivre.

5. Dispositif selon la revendication 4, **caractérisé en ce que** le tronçon d'amortissement d'impulsion (8, 23) est formé par un film (3, 25) et des pistes conductrices appliquées sur celui-ci.

6. Dispositif selon la revendication 5, **caractérisé en ce que** :
- le dispositif est placé dans un logement (2),
- le film (3), qui sert de substrat au dispositif et sur lequel au moins le capteur (7) pour détecter la température de surface du lieu de mesure et l'élément chauffant (5) sont appliqués par injection par l'arrière, est disposé dans la région supérieure du logement, et
- le logement (2) est fermé en direction du bas par une masse de scellement (4) à travers laquelle des tiges de contact (10) sont guidées.

7. Dispositif selon la revendication 6, **caractérisé en ce que** le logement (2) est constitué, au moins au dessus du capteur (6) pour mesurer l'insolation se trouvant sur le film (3), de matériau laissant passer les IR.

8. Dispositif selon la revendication 5, **caractérisé en ce que** :
- le dispositif est placé dans un logement (21),
- le film (25) est flexible et est intégré, avec le capteur (24) pour détecter la température de surface du lieu de mesure appliqué sur celle-ci et avec l'élément chauffant (22), en étant guidé de manière coudée à l'intérieur du logement (21), et
- des bandes de film (26) sont guidées hors du logement (21) .

9. Dispositif selon la revendication 8, **caractérisé en ce qu'**un capteur de température supplémentaire (29), qui présente un élément NTC, pour déterminer un réchauffement propre de l'organe de commande est appliqué sur le film (25) dans le logement (21) et le logement (21) est ouvert dans cette région.

10. Dispositif selon la revendication 8 ou 9, **caractérisé en ce que** le capteur (28) mesurant l'insolation est appliqué sur le film (25) et le logement (21) présente dans la région du capteur (28) une région laissant passer les IR.

11. Dispositif selon la revendication 10, **caractérisé en ce que** la partie du film (25), qui est disposée en dessous du capteur (28) pour mesurer l'insolation, est constituée de matériau laissant passer les IR.

12. Dispositif selon la revendication 3, **caractérisé en ce qu'**un élément NTC est utilisé comme élément chauffant (5, 22).

13. Procédé pour fabriquer un dispositif selon une des revendications 6 ou 7, **caractérisé en ce que** le dispositif est fabriqué par la technique MID.

14. Procédé pour fabriquer un dispositif selon une des revendications 8 à 12, **caractérisé en ce que** le dispositif est fabriqué par la technique de films recouverts de matériau synthétique par injection.
